# EUROPÄISCHE PATENTSCHRIFT

(11) **EP 1 516 162 B1**
(45) Veröffentlichungstag und Bekanntmachung des Hinweises auf die Patenterteilung: **12.09.2007**
(21) Anmeldenummer: 03760610.0
(22) Anmeldetag: 12.06.2003
(51) Int. Cl.: G01F 11/02, G01F 11/08

(54) **VERDRÄNGERPUMPE SOWIE EINE DIE VERDRÄNGERPUMPE AUFWEISENDE VORRICHTUNG ZUM DOSIEREN MINDESTENS EINER FLIESSÄHIGEN KOMPONENTE**
POSITIVE-DISPLACEMENT PUMP AND A DEVICE COMPRISING THIS POSITIVE-DISPLACEMENT PUMP FOR DOSING AT LEAST ONE FREE-FLOWING CONSTITUENT
POMPE VOLUMETRIQUE ET DISPOSITIF COMPRENANT CETTE POMPE VOLUMETRIQUE ET DESTINE AU DOSAGE D'AU MOINS UNE COMPOSANTE APTE A L'ECOULEMENT

(30) Priorität: 19.06.2002 DE 10227485
(43) Veröffentlichungstag der Anmeldung: 23.03.2005
(73) Patentinhaber: Schütze, Thomas, 97453 Schonungen (DE)
(72) Erfinder: Schütze, Thomas, 97453 Schonungen (DE)
(74) Vertreter: LENZING GERBER
(86) Internationale Anmeldenummer: PCT/EP2003/006187
(87) Internationale Veröffentlichungsnummer: WO 2004/001345

(56) Entgegenhaltungen:
- DE-A- 19 523 370
- US-A- 4 280 637
- US-A- 4 569 378

## Beschreibung

Die vorliegende Erfindung betrifft eine Verdrängerpumpe einen Zylinder aufweisend, in dem ein Kolben mittels eines Antriebs hin und her bewegbar ist, wobei eine Dichtung den Kolben umfaßt und abdichtend an der Außenwandung des Kolbens sowie an der Innenwandung des Zylinders anliegt, und die Dichtung den Zylinder in einen ersten und einen zweiten Raum unterteilt, wobei der mit einem Medium gefüllte erste Raum mit einer Verbindungsleitung in Verbindung ist, über die das Medium durch die Bewegung des Kolbens aus dem Raum des Zylinders herausdrückbar bzw. in diesen hineinförderbar ist.

In den verschiedensten Gebieten der Technik ist es immer wieder erforderlich, ein fließfähiges Medium bzw. mehrere fließfähige Medien mittels Pumpen auch unter hohem Druck volumetrisch hochgenau zu dosieren. So zeigen die DE 43 12 995, DE 195 23 370 sowie die EP 0334874 Vorrichtungen und Verfahren zum entsprechenden Dosieren von fließfähigen Komponenten.

Aus der US 4,280,637 ist eine Vorrichtung zur künstlichen Zuführung eines Fluids an einen Patienten bekannt, welche einen Druckkolben aufweist, der einen flexiblen Balg druckbeaufschlagt, welches das Fluid enthält. Der Druckkolben hat einen Indikator zur Anzeige der Bewegung des Kolbens und mehrere Stopvorrichtungen, welche in verschiedenen Positionen anordbar sind, damit der Druckkolben vorbestimmbare Bewegungen durchführt, so dass eine vorbestimmte Menge des Fluids abgegeben wird.

Die US 4,569,378 beschreibt eine Füllmaschine die einen Kolben sowie eine Membran aufweist, welche vom Kolben bewegt wird, derart, dass je nach Kolbenhub eine bestimmte Menge eines Fluids gefördert wird.

Die DE 195 23 370 zeigt den für diese Erfindung gattungsgemäßen Stand der Technik. Die Vorrichtung weist eine Verdrängerpumpe mit einem Plungerkolben auf, der über einen Spindelantrieb translatorisch verstellt wird. Der Plungerkolben wird mit einer doppelten Stangendichtung im Gehäuse abgedichtet, wobei der Leckageraum mit einem Druckschalter verbunden ist, wodurch Leckagen sicher erkannt werden können. Nachteilig bei der verwendeten Stangendichtung ist, dass diese gerade bei hohen Belastungen, bedingt durch große Druckunterschiede vor und hinter den Dichtungen, einem erhöhten Verschleiß unterliegt, wodurch die Verdrängerpumpe störanfällig ist.

Aufgabe der vorliegenden Erfindung ist es, die gattungsgemäße Verdrängerpumpe der Vorrichtung gemäß der DE 195 23 370 derart weiterzubilden, dass die vorgenannten Nachteile vermieden werden.

Erfindungsgemäß wird diese Aufgabe mit einer Verdrängerpumpe den Merkmalen des Anspruchs 1 gelöst. Weitere erfinderische Ausgestaltungen der erfindungsgemäßen Verdrängerpumpen ergeben sich durch die zusätzlichen Merkmale der Unteransprüche. Die Ansprüche 12 bis 19 betreffen eine Dosiervorrichtung unter Verwendung einer der erfindungsgemäßen Verdrängerpumpen gemäß der Ansprüche 1 bis 11.

Die erfindungsgemäße Verdrängerpumpe hat im Gegensatz zu der Stangendichtung gemäß der Vorrichtung gemäß der DE 195 23 370 eine Dichtung zwischen Kolben und Zylinderinnenwandung, welchen geringeren mechanischen Belastungen unterliegt. Durch den vorteilhaften Einsatz einer Rollmembran wird die Reibung zwischen der Membran und dem Kolben bzw. der Zylinderinnenwandung auf ein Minimum reduziert, wodurch die Rollmembran selbst geringeren mechanischen Belastungen unterliegt.

Die Rollmembran sind im normalen Einsatz mechanischen Belastungen ausgesetzt, sofern die Differenzdruck vor und hinter der Dichtung relativ groß ist. Die gestellte Aufgabe wird daher auch dadurch gelöst, daß der Differenzdruck reduziert, bzw. eliminiert wird. Dies wird vorteilhaft dadurch erreicht, indem im zweiten Raum des Zylinders ein Druck eingeregelt wird, so dass der Differenzdruck eine bestimmte Größe aufweist bzw. nicht überschreitet oder aber gar vollends zu Null ausgeregelt wird. Für diese Regelung wird ein Drucksensor benötigt, der den Druck im ersten Raum des Zylinders der Verdrängerpumpe misst. Hierbei ist es prinzipiell möglich, jede Art von Dichtung einzusetzen, da die Dichtung keinen großen mechanischen Belastungen unterliegt. Durch den vorteilhaften Einsatz einer Rollmembran wird jedoch die Reibung zwischen den sich relativ zueinander bewegenden Teilen weiter reduziert. Durch das Ausregeln der Druckdifferenz vor und hinter dem Kolben mittels einer Druckregeleinrichtung, werden zur Verstellung des Kolbens vorteilhaft nur geringe Antriebskräfte z.B. für einen eingesetzten Spindelantrieb benötigt, da der Antrieb nicht die Druckdifferenz überwinden muß. Sofern die Verdrängerpumpe für das Dosieren bzw. Fördern von fließfähigen Komponenten unter hohem Druck von über 100 bar verwendet wird, muß der hohe Druck nicht von dem Antrieb des Kolbens sondern lediglich der Druckregeleinrichtung erzeugt werden.

Bei der Verwendung einer Rollmembran als Dichtungselement kann diese verschiedenartig ausgeführt sein. So ist es möglich, die Rollmembran topfförmig zu gestalten, wobei der Kolben der Verdrängerpumpe innerhalb des Topfes einliegt. Der Kolben und die Rollmembran sollten so dimensioniert sein, dass die Rollmembran möglichst großflächig von dem Kolben unterstützt wird. Es ist ebenso möglich, dass der Topfboden der Rollmembran eine fensterartige Aussparung aufweist. Die Rollmembran kann ebenfalls als Zylinder ausgebildet sein, wobei am einen Ende ein nach innen stehender Kragen an einer Stirnseite des Kolbens anliegt, und ein nach außen gerichtete Kragen am anderen Ende der Rollmembran an der Zylinderinnenwandung oder aber zwischen zwei den Zylinder bildenden Gehäuseteilen abdichtend einliegt.

Vorteilhaft wird die erfindungsgemäße Verdrängerpumpe für eine Vorrichtung zum Dosieren mindestens einer fließfähigen Komponente verwendet, wobei die Komponenten unter hohem Druck gefördert werden müssen. Die Verdrängerpumpe eignet sich somit hervorragend zum Antrieb einer Membranpumpe, da durch die translatorische Bewegung des Kolbens der Verdrängerpumpe exakte Volumina für die Membranpumpe einregelbar sind.

In einer der vorbeschriebenen möglichen Ausführungsformen der Verdrängerpumpe wird der Druck im ersten Zylinderraum mittels einer Druckerfassungseinrichtung erfasst, damit im zweiten Zylinderraum ein entsprechender Druck einregelbar ist. Aufgrund der Messung des Drucks im ersten Zylinderraum liegt eine Steuergröße für das Ansteuern der Membranpumpe vor, so dass keine zusätzlichen Sensoren zur Ansteuerung derselben benötigt werden.

Nachfolgend werden verschiedene Ausführungsformen der erfindungsgemäßen Verdrängerpumpe bzw. Vorrichtung anhand von Zeichnungen näher erläutert.

Es zeigen:
- Fig. 1:: eine Vorrichtung zum Dosieren von fließfähigen Komponenten unter Verwendung einer ersten Ausführungsform einer Verdrängerpumpe;
- Fig. 2:: eine Vorrichtung gemäß Fig. 1, jedoch unter Verwendung einer um 180 Grad gedrehten Rollmembran;
- Fig. 3:: eine Verdrängerpumpe mit dynamischen Dichtungen zur Trennung der zwei Zylinderräume der Verdrängerpumpe.

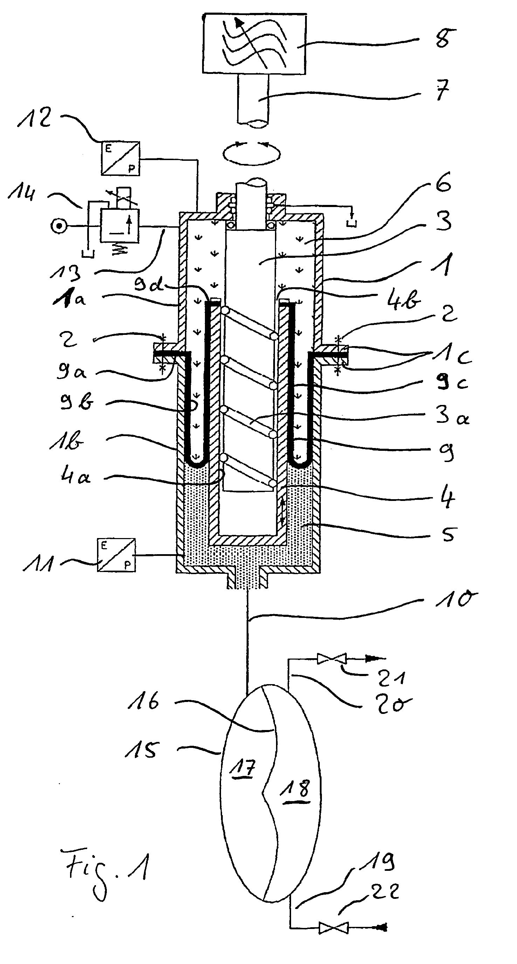

Die Fig. 1 zeigte eine Vorrichtung zur Dosierung von fließfähigen Komponenten, wobei die Vorrichtung eine Verdrängerpumpe 1 sowie eine Membranpumpe 15 umfasst. Die Membranpumpe 1 hat einen Zylinder, welche aus den Gehäusehälften 1a und 1b besteht. Die beiden Gehäusehälften sind mittels nicht explizit dargestellter Befestigungsmittel 2 miteinander verbunden. Zwischen den kragenförmigen Vorsprüngen 1c der Gehäusehälften 1a und 1b ist ein Kragen 9a einer Rollmembran 9 abdichtend gehalten. Die Rollmembran 9 ist mit ihrem nach innen gerichteten Kragen 9d an einem Kolben 4 an dessen freien Ende 4b abdichtend befestigt. Der Kolben 4 und die Rollmembran 9 unterteilen den Zylinder in einen ersten Raum 5 und einen zweiten Raum 6. Der Kolben 4 wird mittels eines Spindelantriebs 3, 7, 8 verstellt. Hierzu weist der Kolben an seiner Innenwandung ein Gewinde 4a auf, welches mit dem Gewinde 3a der Spindel 3 zusammenwirkt. Über nicht dargestellte Führungen wird ein Verdrehen des Kolbens 4 beim Verdrehen der Spindel 3 verhindert. Auf die Führungen kann bei entsprechender Ausgestaltung der Rollmembran eventuell verzichtet werden.

Die Spindel 3 weist eine Welle 7 auf, welche abdichtend eine Öffnung des Zylinders durchgreift und mit einem Antrieb 8 in Verbindung ist. Der Antrieb kann eine Servomotor oder ein Schrittmotor sein. Zusätzlich kann ein nicht dargestelltes Getriebe zwischen Antrieb 8 und Spindel 3 zwischengeschaltet werden.

Die Rollmembran 9 liegt zum einen an der Innenwandung des Zylinders mit ihrem Abschnitt 9b; zum anderen liegt sie ebenfalls mit ihrem Abschnitt 9c an der Außenwandung des Kolbens 4 an. Durch Verstellen des Kolbens 4 in axialer Richtung werden die Abschnitte 9b bzw. 9c nicht entlang der Wandung von Kolben 4 bzw. Zylinder bewegt. Vielmehr rollt sich die Rollmembran 9 von einer Wandung ab und legt sich an die andere Wandung von Kolben bzw. Zylinder an. Im ersten Raum 5 ist ein Mittlermedium, welches über eine Verbindungsleitung 10 in den Hydraulikraum 17 einer Membranpumpe 15 drückbar ist, bzw. aus dem Hydraulikraum 17 wieder heraus in den ersten Raum 5 förderbar ist. Wird der Kolben 4 in der Fig. 1 nach unten bewegt, so verkleinert sich das Volumen des ersten Raums 5, wodurch das Mittlermedium in den Hydraulikraum 17 gedrückt wird. Die Rollmembran 9 bildet eine Seitenwand des ersten Raums 5, wobei die Oberfläche der durch die Rollmembran gebildeten Seitenwand sich beim Verstellen des Kolbens 4 nicht verändert, wodurch eine genaue Beziehung zwischen der Kolbenposition 4 und dem Volumen des ersten Raums 5 gegeben ist. Der erste Raum 5 der Verdrängerpumpe 1, die Verbindungsleitung 10 und der Hydraulikraum 17 der Membranpumpe 15 bilden dabei ein geschlossenes System.

Zum Fördern der fließfähigen Komponente wird diese über eine Zuleitung 19 und ein Ventil 22 in den Komponentenraum 18 der Membranpumpe 15 gedrückt bzw. durch Entleeren des Hydraulikraums 17 in den Komponentenraum 18 durch Erzeugung eines Unterdrucks gesaugt. Nachdem der Komponentenraum 18 mit der zu dosierenden Komponente gefüllt ist, wird der Spindelantrieb 8 derart angesteuert, dass die Spindel 3 den Kolben 4 nach unten bewegt, wodurch das Mittlermedium aus dem ersten Raum 5 in den Hydraulikraum 17 gefördert wird. Hierdurch wird die Membran 16 derart bewegt, dass die Komponente aus dem Komponentenraum 18 über die Ableitung 20 und das Ventil 22 entsprechend dosiert ausgegeben wird. Die Membranpumpe und deren Ansteuerung unterscheidet sich von ihrer Funktion und Arbeitsweise nicht von der der DE 195 23 370.

Damit zwischen dem ersten Raum 5 und dem zweiten Raum 6 keine zu große Druckdifferenz entsteht, weist die Dosiervorpumpe eine Druckmittelleitung 13 auf, über die der zweite Raum 6 mit einer Druckerzeugungseinrichtung 14 in Verbindung ist. Über Drucksensoren 11 und 12 wird der jeweilige Druck im ersten bzw. zweiten Raum 5, 6 ermittelt. Die Druckerzeugungseinrichtung 14 kann prinzipiell jeden beliebigen Druck im zweiten Raum 6 einregeln. Zur Entlastung des Spindelantriebs sowie der Reibung zwischen den bewegbaren Teilen der Verdrängerpumpe 1 ist es jedoch sinnvoll, wenn die Drücke im ersten und zweiten Raum 5, 6 annähernd gleich sind. Je nach Anwendungsfall kann es auch sinnvoll sein, den Druck im einen Raum 5,6 drei bis fünf bar niedriger einzuregeln als in dem jeweils anderen Raum. Damit die in Figur 1 gezeigte Rollmembran 9 sich stets gut abrollt, ist es sinnvoll, wenn der Druck im zweiten Raum 6 etwas höher ist als im ersten Raum 5.

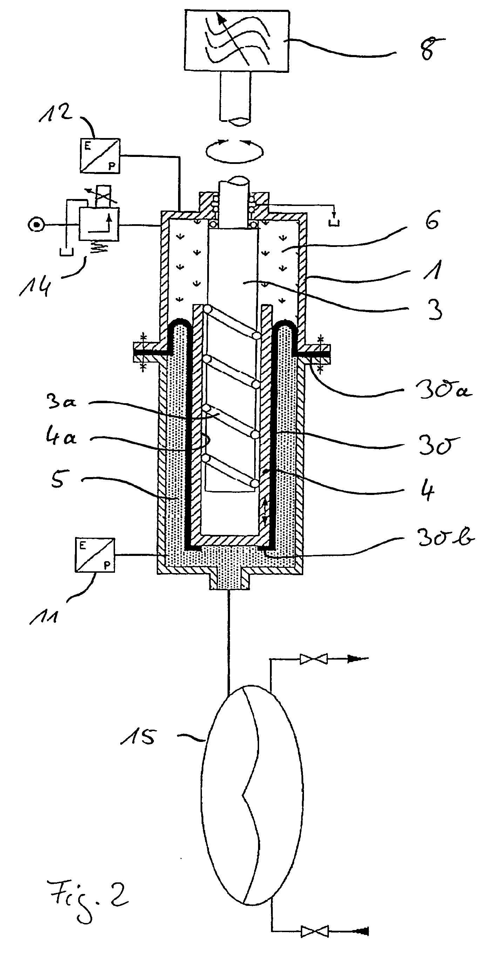

Die Fig. 2 zeigt eine bis auf die Anordnung der Rollmembran identische Vorrichtung. Die Rollmembran 30 der Vorrichtung gemäß der Figur 2 ist lediglich um 180 Grad gedreht in der Verdrängerpumpe 1 angeordnet, so dass der Topfboden 30b an der unteren Stirnseite des Kolbens 4 abdichtend anliegt. Bei dieser Ausgestaltung ist es sinnvoll, wenn der Druck im zweiten Raum stets niedriger eingeregelt wird als der aktuelle Druck im ersten Raum 5, damit sich der Topfboden 30b der Rollmembran 30 stets abdichtend an die Stirnseite des Kolbens 4 anlegt.

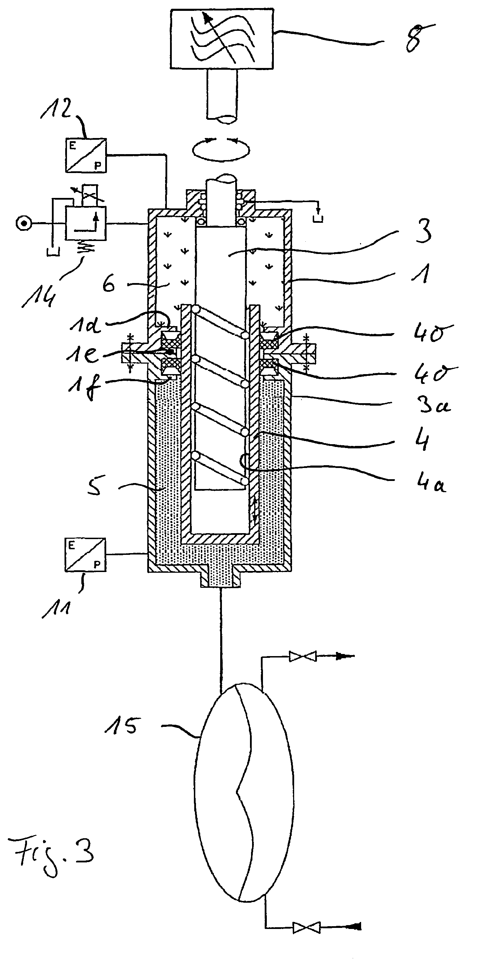

Die Fig. 3 zeigt ebenfalls ein zu den Ausführungsformen der Figuren 1 und 2 identische Aufbau der Vorrichtung, mit dem einzigen Unterschied, dass statt einer Rollmembran als Dichtungselement zur Trennung vom ersten und zweiten Raum 5, 6 des Zylinders der Verdrängerpumpe 1 eine beliebige dynamische Dichtung 40 Verwendung findet. Aufgrund der wenn überhaupt nur geringen Druckdifferenz zwischen den beiden Räumen 5 und 6 unterliegt die Dichtung 40 nur einem sehr geringen Verschleiß. Die Dichtungen 40 liegen in ringförmigen Nuten ein, welche durch an der Innenwandung des Zylinders angeformte nach innen weisende kragenförmige Vorsprünge 1d, 1e, 1f gebildet sind.

## Patentansprüche

1. Verdrängerpumpe (1), einen Zylinder (1a, 1b) aufweisend, in dem ein Kolben (4) mittels eines Antriebs (3, 7, 8) hin und her bewegbar ist, wobei eine Dichtung den Kolben (4) umfasst und abdichtend an der Außenwandung des Kolbens (4) sowie an der Innenwandung des Zylinders (1a, 1b) anliegt, und die Dichtung (40) den Zylinder in einen ersten und einen zweiten Raum (5, 6) unterteilt, wobei der mit einem Medium gefüllte erste Raum (5) mit einer Verbindungsleitung (10) in Verbindung ist, über die das Medium durch die Bewegung des Kolbens (4) aus dem Raum (5) des Zylinders herausdrückbar bzw. in diesen hineinförderbar ist, **dadurch gekennzeichnet, dass** eine Druckerzeugungseinrichtung (14) im zweiten Raum (6) einen Druck einregelt, der ungefähr dem Druck entspricht, der im ersten Raum (5) herrscht.

2. Verdrängerpumpe nach Anspruch 1, **dadurch gekennzeichnet, dass** die Dichtung eine Rollmembran (9, 30) ist.

3. Verdrängerpumpe nach Anspruch 2, **dadurch gekennzeichnet, dass** die Rollmembran (9, 30) zumindest einen nach außen gerichteten insbesondere angeformten Kragen (9a, 30a) hat, der zwischen zwei den Zylinder bildenden Gehäusehälften (1a, 1b) abdichtend einliegt.

4. Verdrängerpumpe nach Anspruch 2 oder 3, **dadurch gekennzeichnet, dass** die Rollmembran (9, 30) in axialer Richtung abschnittsweise an der Außenwandung des Kolbens (4) anliegt und/oder mit ihrem einen freien Ende (9d) an der Außenwandung, insbesondere an einer Stirnseite (4b) des Kolbens (4) abdichtend befestigt ist.

5. Verdrängerpumpe nach einem der Ansprüche 2 bis 4, **dadurch gekennzeichnet, dass** die Rollmembran (9, 30) topfförmig ist, wobei sie mit ihrer dem Topfboden abgewandten freien Stirnseite an dem Zylinder abdichtend befestigt ist.

6. Verdrängerpumpe nach einem der Ansprüche 2 bis 5, **dadurch gekennzeichnet,dass** die Rollmembran mit ihrem einen freien Ende an einer Stirnseite des Kolbens abdichtend anliegt und/oder an der Stirnseite abdichtend befestigt ist.

7. Verdrängerpumpe nach Anspruch 1, **dadurch gekennzeichnet, dass** die Dichtung (40) eine dynamische Dichtung, insbesondere eine Stangendichtung ist.

8. Verdrängerpumpe nach einem der vorherigen Ansprüche, **dadurch gekennzeichnet dass** je nach Bauart der Dichtung (9, 30, 40) im zweiten Raum (6) ein Druck aufgebaut ist bzw. eingeregelt wird, der um ca. 3-5 bar über oder unter dem Druck liegt, der im ersten Raum (5) herrscht.

9. Verdrängerpumpe nach einem der vorherigen Ansprüche, **dadurch gekennzeichnet , dass** der Druck im zweiten Raum (6) mittels eines Mediums erzeugt wird, welches über eine Zuleitung (13) und Ventile in und aus dem Raum (6) gelangt.

10. Verdrängerpumpe nach einem der vorherigen Ansprüche, **dadurch gekennzeichnet, dass** ein Spindelantrieb (3, 3a) den Kolben (4) verstellt.

11. Verdrängerpumpe nach Anspruch 10, **dadurch gekennzeichnet, dass** ein Schritt- oder Servomotor (8) die Spindel (3, 3a) direkt oder über ein Getriebe antreibt.

12. Vorrichtung zum Dosieren mindestens einer fließfähigen Komponente unter Verwendung einer Verdrängerpumpe (1) nach einem der vorherigen Ansprüche 1 bis 11, **dadurch gekennzeichnet, dass** der erste Raum (5) über die Verbindungsleitung (10) mit einem Hydraulikraum (17) einer Membranpumpe (15) in Verbindung ist, wobei die Membranpumpe (15) ein Gehäuse mit einer Kavität (17, 18) aufweist, und die Kavität (17, 18) mittels einer Membran (16) in den Hydraulikraum (17) und einen Komponentenraum (18) unterteilt ist, und die Membran (16) den Hydraulikraum (17) und den Komponentenraum (18) abdichtend voneinander trennt.

13. Vorrichtung nach Anspruch 12, **dadurch gekennzeichnet, dass** eine Druckregeleinrichtung (14) den Druck im zweiten Raum (6) des Zylinders einregelt.

14. Vorrichtung nach Anspruch 12 oder 13, **dadurch gekennzeichnet, dass** eine Druckmesseinrichtung (11) den Druck im ersten Raum (5) und/oder im Hydraulikraum (17) misst.

15. Vorrichtung nach einem der Ansprüche 12 bis 14, **dadurch gekennzeichnet dass** während des Dosiervorgangs der Druck im zweiten Raum und/oder im Hydraulikraum stets größer oder gleich dem Druck im ersten Raum ist.

16. Vorrichtung nach einem der Ansprüche 12 bis 15, **dadurch gekennzeichnet, dass** während des Herausdrückens des Mediums mittels des Kolbens aus dem ersten Raum in den Hydraulikraum die Druckregeleinrichtung im zweiten Raum ein größeren Druck als im ersten Raum einregelt.

17. Vorrichtung nach einem der Ansprüche 12 bis 16, **dadurch gekennzeichnet , dass** in der Zuleitung zum Komponentenraum ein Ventil, insbesondere ein Rückschlagventil angeordnet ist, und daß in der Leitung, über die die Komponente aus dem Komponentenraum heraus gefördert wird ein Ventil, insbesondere Rückschlagventil, angeordnet ist.

18. Vorrichtung nach einem der Ansprüche 12 bis 17, **dadurch gekennzeichnet , dass** die Membran eine Doppelmembran ist, die Leckageanzeige ausgestaltet ist.

19. Dosiervorrichtung unter Verwendung von mindestens zwei Vorrichtungen gemäß einer der Ansprüche 12 bis 18, **dadurch gekennzeichnet , dass** die Vorrichtungen parallel geschaltet sind.

## Claims

1. Displacement pump (1) having a cylinder (1a, 1b) in which a piston (4) can be moved backwards and forwards by means of a drive unit (3, 7, 8), wherein a seal surrounds the piston (4) and is in contact with sealing effect with the outer wall of the piston (4) as well as with the inner wall of the cylinder (1a, 1b) and the seal (40) subdivides the cylinder into a first and a second space (5, 6), wherein the first space (5), filled with a medium, is in connection with a connection line (10), by means of which the medium can be pressed by the movement of the piston (4) out of the space (5) of the cylinder, or can be conveyed into this, **characterised in that** a pressure generating device (14) regulates a pressure in the second space (6), which corresponds approximately to the pressure which prevails in the first space (5).

2. Displacement pump according to Claim 1, **characterised in that** the seal is a roll diaphragm (9, 30).

3. Displacement pump according to Claim 2, **characterised in that** the roll diaphragm (9, 30) has at least one collar (9a, 30a) directed outwards, in particular moulded, which is located with sealing effect between two housing halves (1a, 1b) which form the cylinder.

4. Displacement pump according to Claim 2 or 3, **characterised in that** the roll diaphragm (9, 30) is in contact in the axial direction section by section on the outer wall of the piston (4) and/or is secured by its one free end (9d) on the outer wall, in particular on a face side (4b), of the piston (4), such as to form a seal.

5. Displacement pump according to any one of Claims 2 to 4, **characterised in that** the roll diaphragm (9, 30) is pot-shaped, wherein it is secured to the cylinder by its free face side facing away from the pot base.

6. Displacement pump according to any one of Claims 2 to 5, **characterised in that** the roll diaphragm is in sealing contact with its one free end on a face side of the piston and/or is secured to the face side such as to form a seal.

7. Displacement pump according to Claim 1, **characterised in that** the seal (40) is a dynamic seal, in particular a rod seal.

8. Displacement pump according to any one of the preceding claims, **characterised in that**, depending on the design type of the seal (9, 30, 40), a pressure is built up or regulated in the second space (6), which lies about 3-5 bar above or below the pressure which prevails in the first space (5).

9. Displacement pump according to any one of the preceding claims, **characterised in that** the pressure in the second space (6) is produced by means of a medium which passes via a delivery line (13) and valves into and out of the space (6).

10. Displacement pump according to any one of the preceding claims, **characterised in that** a spindle drive (3, 3a) adjusts the piston (4).

11. Displacement pump according to Claim 10, **characterised in that** a stepping motor or servo motor (8) drives the spindles (3, 3a) directly or by way of a gear system.

12. Device for the metering of at least one fluid component, making use of a displacement pump (1) according to any one of the preceding Claims 1 to 11, **characterised in that** the first space (5) is in connection by way of the connection line (10) with a hydraulic chamber (17) of a diaphragm pump (15), wherein the diaphragm pump (15) has a housing with a cavity (17, 18) and the cavity (17, 18) is subdivided by means of a diaphragm (16) into the hydraulic chamber (17) and a component chamber (18) and the diaphragm (16) separates the hydraulic chamber (17) and the component chamber (18) from one another in a sealing manner.

13. Device according to Claim 12, **characterised in that** a pressure regulating device (14) regulates the pressure in the second space (6) of the cylinder.

14. Device according to Claim 12 or 13, **characterised in that** a pressure measuring device (11) measures the pressure in the first space (5) and/or in the hydraulic chamber (17).

15. Device according to any one of Claims 12 to 14, **characterised in that**, during the metering process, the pressure in the second space and/or in the hydraulic chamber is always greater than or equal to the pressure in the first space.

16. Device according to any one of Claims 12 to 15, **characterised in that**, during the pressing out of the medium by means of the piston from the first space into the hydraulic chamber, the pressure regulating device regulates in the second space a greater pressure in the second chamber than in the first chamber.

17. Device according to any one of Claims 12 to 16, **characterised in that** a valve, in particular a non-return valve, is arranged in the delivery line to the component chamber, and **in that** in the line via which the component is conveyed out of the component chamber a valve is arranged, in particular a non-return valve.

18. Device according to any one of Claims 12 to 17, **characterised in that** the diaphragm is a double diaphragm, designed as a leak indicator.

19. Metering device making use of at least two devices according to any one of Claims 12 to 18, **characterised in that** the devices are connected in parallel.

## Revendications

1. Pompe volumétrique (1) présentant un cylindre (1a, 1b) dans lequel un piston (4) est mobile en va-et-vient au moyen d'un entraînement (3, 7, 8), dans laquelle un joint entoure le piston (4) et s'appuie de manière hermétique contre la paroi extérieure du piston (4) ainsi que contre la paroi intérieure du cylindre (1a, 1 b), et le joint (40) subdivise le vérin en une première et une deuxième chambres (5, 6), dans laquelle la première chambre (5) remplie d'un fluide communique avec une conduite de liaison (10) par l'intermédiaire de laquelle le fluide peut être refoulé par le mouvement du piston (4) hors de la chambre (5) du cylindre resp. peut être introduit dans celle-ci, **caractérisé en ce qu'**un dispositif générateur de pression (14) instaure dans la deuxième chambre (6) une pression qui correspond approximativement à la pression qui règne dans la première chambre (5).

2. Pompe volumétrique selon la revendication 1, **caractérisée en ce que** le joint est une membrane roulante (9, 30).

3. Pompe volumétrique selon la revendication 2, **caractérisée en ce que** la membrane roulante (9, 30) possède au moins un col (9a, 30a) dirigé vers l'extérieur, en particulier rapporté, qui s'appuie hermétiquement entre deux moitiés de boîtier (1a, 1b) formant le cylindre.

4. Pompe volumétrique selon la revendication 2 ou 3, **caractérisée en ce que** la membrane roulante (9, 30) s'appuie dans la direction axiale par sections contre la paroi extérieure du piston (4) et/ou est fixée avec sa première extrémité libre (9d) à la paroi extérieure, en particulier à une face frontale (4b) du piston (4).

5. Pompe volumétrique selon l'une des revendications 2 à 4, **caractérisée en ce que** la membrane roulante (9, 30) est en forme de pot, en étant fixée de manière hermétique au cylindre par sa face frontale libre opposée à son fond de pot.

6. Pompe volumétrique selon l'une des revendications 2 à 5, **caractérisée en ce que** la membrane volumétrique s'appuie hermétiquement avec sa première extrémité libre contre une face frontale du piston et/ou est fixée hermétiquement à la face frontale.

7. Pompe volumétrique selon la revendication 1, **caractérisée en ce que** le joint (40) est un joint dynamique, en particulier un joint à barre.

8. Pompe volumétrique selon l'une des revendications précédentes, **caractérisée en ce que**, selon le type de construction du joint (9, 30, 40), une pression est établie resp. régulée dans la deuxième chambre (6), qui est supérieure ou inférieure d'environ 3-5 bar à la pression qui règne dans la première chambre (5).

9. Pompe volumétrique selon l'une des revendications précédentes, **caractérisée en ce que** la pression dans la deuxième chambre (6) est produite au moyen d'un fluide qui arrive dans la chambre et en sort par l'intermédiaire d'une conduite (13) et de vannes.

10. Pompe volumétrique selon l'une des revendications précédentes, **caractérisée en ce qu'**une broche d'entraînement (3, 3a) déplace le piston (4).

11. Pompe volumétrique selon la revendication 10, **caractérisée en ce qu'**un moteur pas à pas ou un moteur asservi (8) entraîne la broche (3, 3a) directement ou par l'intermédiaire d'un mécanisme à engrenages.

12. Dispositif pour le dosage d'au moins une composante apte à l'écoulement en utilisant une pompe volumétrique (1) selon l'une des revendications précédentes 1 à 11, **caractérisé en ce que** la première chambre (5) communique par la conduite de liaison (10) avec une chambre hydraulique (17) d'une pompe à membrane (15), la pompe à membrane (15) présentant un boîtier avec une cavité (17, 18) et la cavité (17, 18) étant subdivisée au moyen d'une membrane (16) en la chambre hydraulique (17) et une chambre à composante (18), et la membrane (16) sépare hermétiquement l'une de l'autre la chambre hydraulique (17) et la chambre à composante (18).

13. Dispositif selon la revendication 12, **caractérisé en ce qu'**un dispositif de régulation de pression (14) régule la pression dans la deuxième chambre (6) du cylindre.

14. Dispositif selon la revendication 12 ou 13, **caractérisé en ce qu'**un dispositif de mesure de pression (11) mesure la pression dans la première chambre (5) et/ou dans la chambre hydraulique (17).

15. Dispositif selon l'une des revendications 12 à 14, **caractérisé en ce que**, pendant une opération de dosage, la pression dans la deuxième chambre et/ou dans la chambre hydraulique est toujours supérieure ou égale à la pression dans la première chambre.

16. Dispositif selon l'une des revendications 12 à 15, **caractérisé en ce que**, pendant un refoulement du fluide de la première chambre vers la chambre hydraulique au moyen du piston, le dispositif de régulation de pression régule dans la deuxième chambre une pression plus grande que dans la première chambre.

17. Dispositif selon l'une des revendications 12 à 16, **caractérisé en ce que** sur la conduite menant à la chambre à composante est placée une vanne, en particulier un clapet antiretour, et **en ce que** sur la conduite par laquelle la composante est refoulée de la chambre à composante est placée une vanne, en particulier un clapet antiretour.

18. Dispositif selon l'une des revendications 12 à 17, **caractérisé en ce que** la membrane est une double membrane, l'affichage de fuites est réalisé

19. Dispositif de dosage utilisant au moins deux dispositifs selon l'une des revendications 12 à 18, **caractérisé en ce que** les dispositifs sont montés en parallèle.
